# EUROPEAN PATENT SPECIFICATION

(11) **EP 2 067 223 B1**
(45) Date of publication and mention of the grant of the patent: **21.06.2017**
(21) Application number: 06821717.3
(22) Date of filing: 29.09.2006
(51) Int. Cl.: H02G 3/18

(54) **MODULAR ELECTRICAL DEVICE, PARTICULARLY FOR SWITCHES, SOCKETS AND OTHER ELECTRICAL COMPONENTS TO BE APPLIED TO A WALL**
MODULARE ELEKTRISCHE ANORDNUNG INSBESONDERE FÜR SCHALTER, SOCKEL UND ANDERE AN EINER WAND ANZUBRINGENDE ELEKTRISCHE KOMPONENTEN
DISPOSITIF ÉLECTRIQUE MODULAIRE, DESTINÉ SPÉCIFIQUEMENT À DES INTERRUPTEURS, DES PRISES DE COURANT ET D'AUTRES COMPOSANTS ÉLECTRIQUES À FIXER SUR UNE PAROI

(43) Date of publication of application: 10.06.2009
(60) Divisional application: 13003217.0
(73) Proprietor: GEWISS S.p.A., 24069 Cenate Sotto (Bergamo) (IT)
(72) Inventor: BOSATELLI, Domenico, I-24069 Cenate Sotto (Bergamo) (IT)
(74) Representative: Forattini, Amelia
(86) International application number: PCT/IT2006/000693
(87) International publication number: WO 2008/038314

(56) References cited:
- EP-A1- 0 989 648
- DE-A1- 19 716 906
- FR-A- 2 856 202
- US-A- 5 667 059

## Description

The present invention relates to a modular electrical device, particularly for switches, sockets and other electrical components to be applied to a wall.

It is known that the electrical system of a building includes multiple boxes mounted on the walls and wherein various electrical components, such as sockets, switches, and other components having various functions are arranged.

The boxes are normally provided with a supporting frame and the electrical components are fixed to the frame by screws.

The boxes are first mounted on the wall, with the electric wires protruding from them, and then the electrician connects the electrical components to the wires and fixes the components to the boxes by means of the frame.

Fixing the components to the frame by means of screws is time consuming.

Devices are known wherein the components are fixed to the frame without screws, but they do not always ensure stable and reliable fixing and a component, for example a socket, can detach from the frame when one attempts to remove a plug from such socket.

EP0989648 discloses a system for securing electrical apparatuses in a supporting frame, comprising tongues engaging respective seats for sliding the apparatuses in the frame, from either the front or the rear of the frame according to the preamble of claim 1. FR2856202 discloses another system for fastening electrical components to a frame by means of sliding engagement means.

The aim of the present invention is to provide a device which overcomes the drawbacks of the cited prior art.

An object of the invention is to provide a device which allows simple and easy connection of components to the frame.

A further object of the invention is to provide a device which allows stable and reliable fixing of the components to the frame.

A further object is to provide a device which allows to separate easily the components of the frame if one wishes to act on the device for maintenance or to change the electrical components.

An important object of the present invention is to provide a device which is constituted by a limited number of parts and can be manufactured for example by injection molding and with other methods and materials normally used in this field.

This aim and these and other objects, which will become better apparent hereinafter, are achieved by a modular electrical device, particularly for switches, sockets and other electrical components to be applied to a wall, as defined in the appended claim. Further characteristics and advantages will become better apparent from the description of preferred but not exclusive embodiments of the invention, illustrated by way of non-limiting example in the accompanying drawings, wherein:

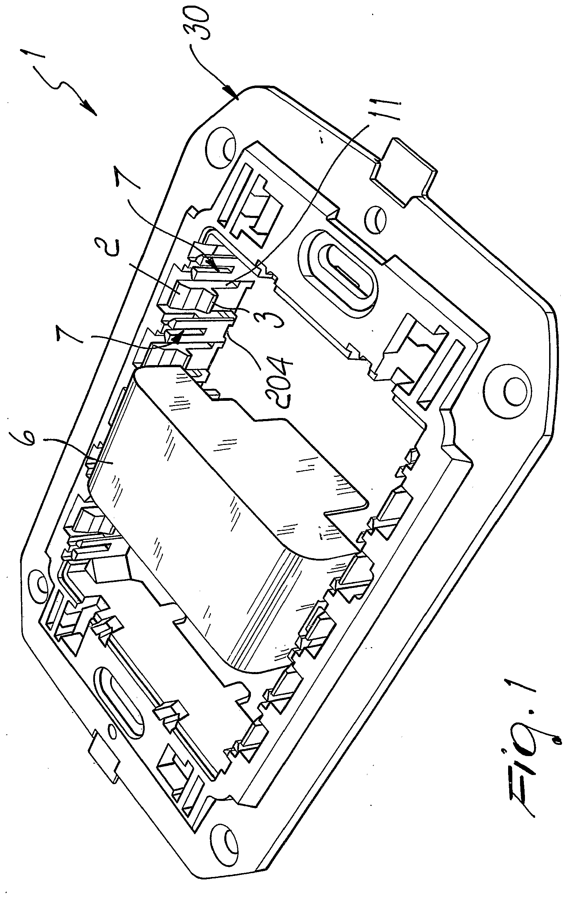

Figure 1 is a perspective view of a device according to the invention;

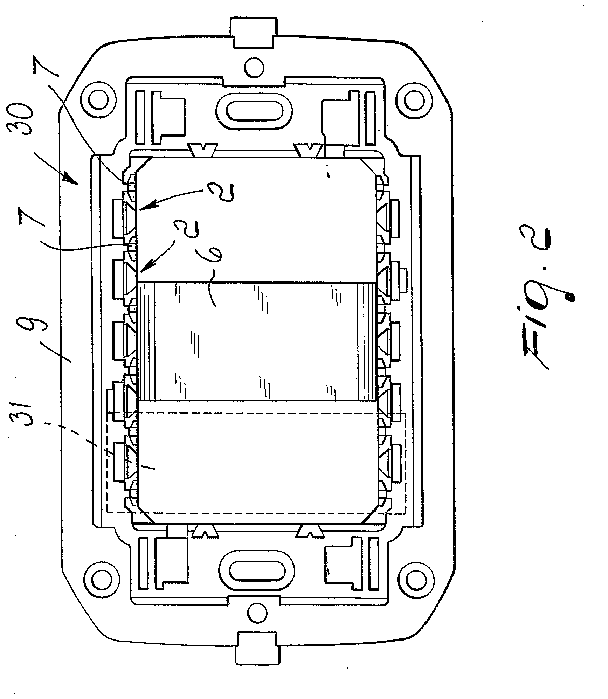

Figure 2 is a front view of the device of Figure 1;

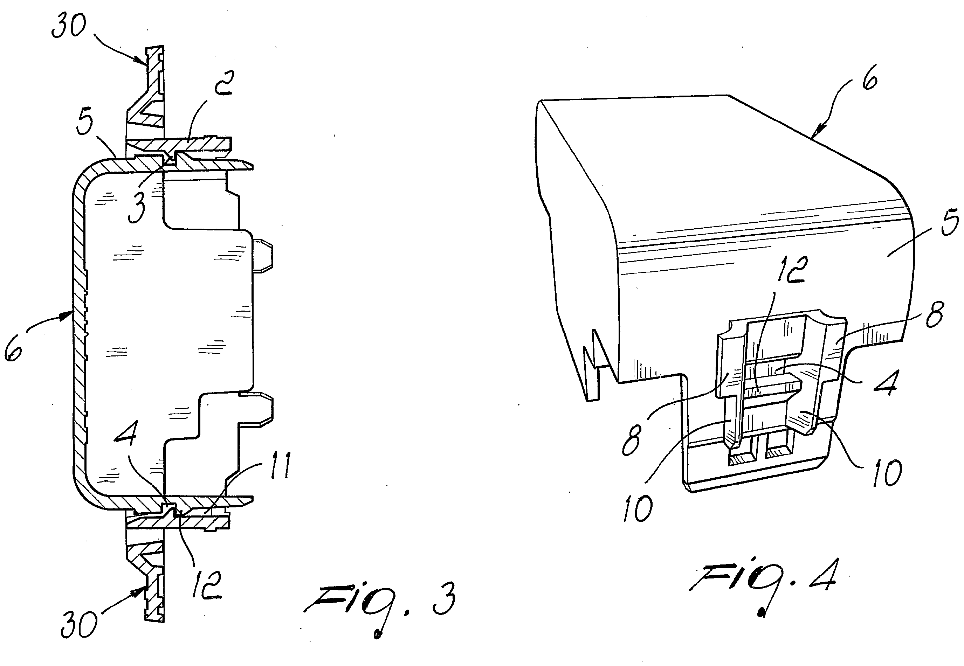

Figure 3 is a sectional side view of the device of Figure 2;
Figure 4 is a perspective view of an electrical component of the device of Figure 3;
Figure 5 is a rear perspective view of the frame of a device according the invention;
Figure 6 is a front view of the frame of the device of Figure 5;
Figure 7 is a sectional side view of the device of Figure 6;
Figure 8 is a perspective view of an electrical component of the device of Figure 7;
Figure 9 is a perspective view of a device according to the invention;
Figure 10 is a front view of the device of Figure 9;
Figure 11 is a sectional side view of the device of Figure 10;
Figure 12 is a perspective view of an electrical component of the device of Figure 11.

With reference to the figures, the device according to the invention, generally designated by the reference numeral 1, includes a frame 30 provided with multiple engagement members, each of which is suitable to engage a grip member provided on an electrical component 6 to be associated with the frame 30.

Each engagement member includes a flexible member 2, which is provided with a tooth 3 which engages a cavity 4 formed in each of two opposite walls 5 of the electrical component 6.

The flexible member 2 is delimited laterally by two guiding members 7 that guide the electrical component 6 during insertion in the frame 30, so as to facilitate its installation.

The guiding members 7 are provided so as to allow the insertion and sliding of dovetail members 8 provided on the walls 5 of the electrical component 6.

The assembly constituted by the flexible member 2 and the guiding members 7 constitutes a component insertion cell, which is designated by the reference numeral 31 and shown in broken lines in Figure,2.

The cells 31 are arranged along the transverse sides 9 of the frame 30 at such a distance as to allow the movement/insertion of the electrical component 6 in steps of half of module.

It is thus possible to insert a wide variety of electrical components in the frame. The number of components that can be inserted are multiples of the basic dimension, which is equal to half a module.

The electrical components 6 are inserted in the frame 30 from the front.

It is therefore possible to fix the frame 30 to the box (not shown in the figures) by means of fasteners, for example screws, to connect the electrical components 6 to the power supply/distribution wires, and finally to insert the electrical components 6 within the frame 30. Installation is therefore easy and simplified.

The electrical components 6 can be removed from the frame 30 from the front by using a tool (for example a screwdriver), which allows to apply a slight pressure to the flexible member 2.

The possibility of removing the electrical components 6 from the front, for example for replacement or maintainance, has the unquestionable advantage of avoiding the removal of the frame 30 from the box and secondly of avoiding indirect action on the electrical components 6 that are not involved.

The dovetail engagement members 8 formed on the walls 5 of the electrical component 6 delimit the cavity 4 formed in the wall 5.

The insertion of the electrical component 6 within the frame 30 is guided by the cooperation between the dovetail engagement members 8 and the guiding members 7.

The insertion of the electrical component 6 ends when the tooth 3 of the flexible member 2 engages the cavity 4 formed in the wall 5 of the electrical component 6, an operation which can be detected by a "click" sound, and the end part 10 of the dovetail engagement members 8 abuts on the rear part 11 of the cells 31.

Such an insertion allows to prevent unwanted movements and/or separations of the electrical component 6 with respect to the frame 30, following the application of axial and non-axial traction and/or compression forces, such as for example the insertion and extraction of a plug, and the manual manoeuvre for switching on/off.

A force applied to the electrical component 6 in such a direction as to push it toward the inside of the frame 30, i.e., a compression, is contrasted by the ends 10 of the dovetail engagement members 8 on the bottom of notches 11 formed at the sides of the elastic member 2.

A force applied to the electrical component 6 in such a direction as to pull it toward the outside of the frame 30, i.e., traction, is contrasted by tooth 3, of the flexible member 2, abutting on the protruding wall 12 of the cavity 4 formed in the walls 5 of the electrical component 6.

Such an insertion allows to relieve the transverse sides 9 of the frame 30 of the forces applied by the electrical components 6 following their installation.

These forces are in fact discharged partly onto the flexible member 2 and partly onto the guiding members 7, thus avoiding the deformation of the frame 30.

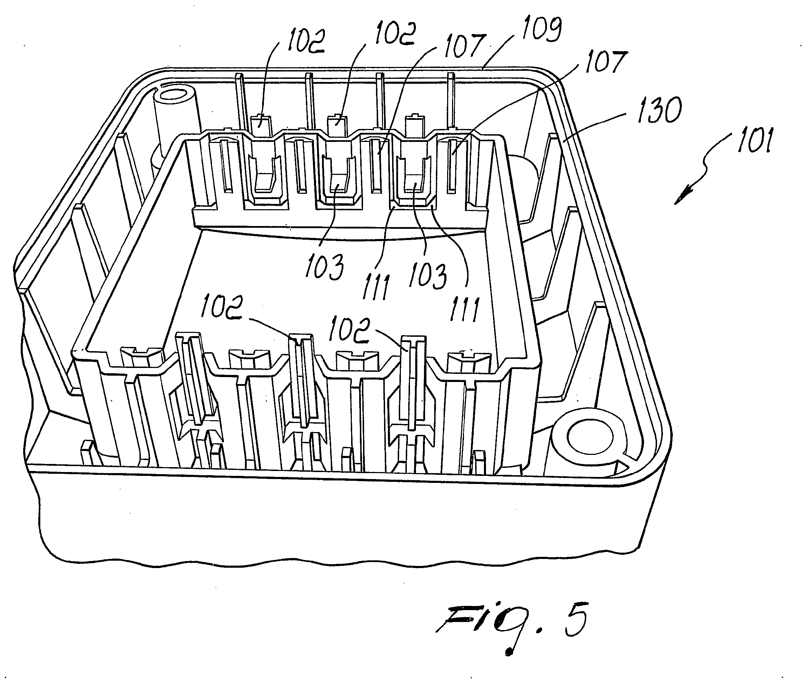

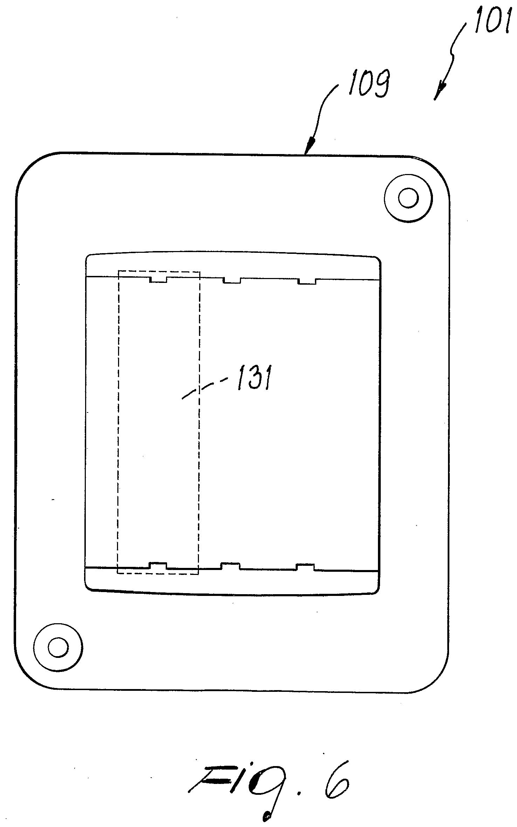

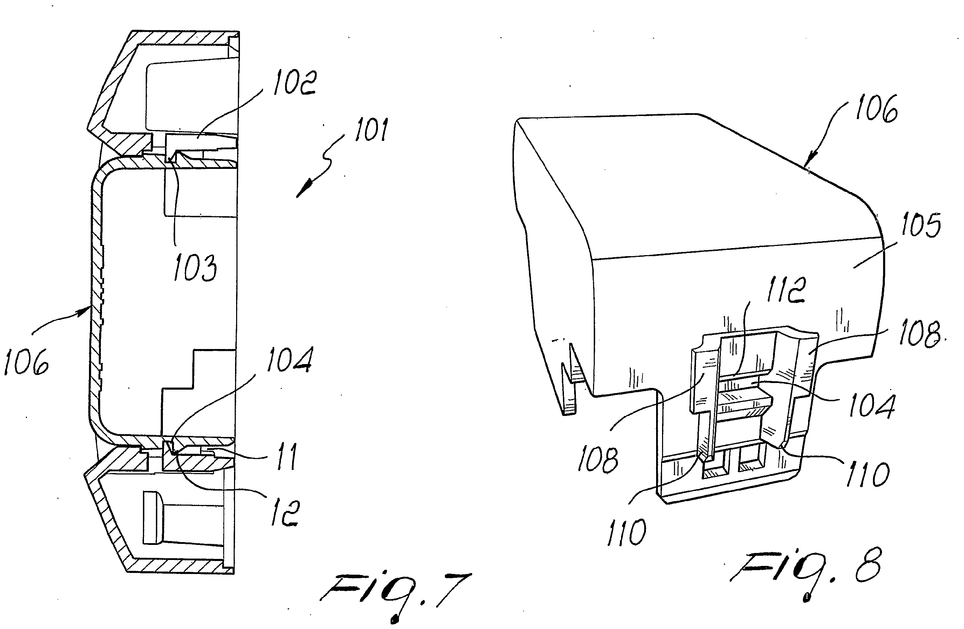

Figures 5 to 8 illustrate a device according to another aspect of the invention, generally designated by the reference numeral 101, which includes a frame 130 constituted by a support which is fixed to a box or backplate by means of fasteners such as, for example, screws. The type of installation of this assembly is typically a wall-mount.

The frame 130 is provided with multiple engagement members, each engaging a grip member provided on an electrical component 106 to be associated with the frame 130.

Each engagement member has a flexible member 102, which is provided with a tooth 103 which engages a cavity 104 provided in each of two opposite walls 105 of the electrical component 106.

The flexible member 102 is.delimited laterally by guiding members 107 that guide the electrical component 106 during insertion in the frame 130, so as to considerably facilitate its installation.

The guiding members 107 allow the insertion and sliding of dovetail members 108 provided on the walls 105 of the electrical component 106.

The assembly constituted by the flexible member 102 and the guiding members 107 constitutes a component insertion cell 131.

The cells 131 are arranged along the transverse sides 109 of the frame 130 at such a distance as to allow the movement/insertion of the electrical component 106 in steps of half a module.

It is thus possible to insert a large variety of electrical components in the frame. The numbers of components that can be inserted in the frame are multiples of the basic dimension, which is equal to half a module.

The electrical components 106 are inserted in the frame 130 from the rear.

The rear insertion of the electrical components allows to achieve the degree of protection prescribed by regulations for the assembly constituted by the frame 130, the box and the electrical components 106.

The electrical components 106 can be removed from the frame 130 from the rear by using a tool (for example a screwdriver) which allows to apply a slight pressure to the flexible member 102.

During the operations for maintaining and/or wiring the electrical components, the degree of protection is inevitably not ensured. For that reason, the rearward removal of the electrical components can occur only after removing the front of the box.

The electrical component 106 is provided with dovetail engagement members 108 on the walls 105. The dovetail engagement members 108 delimit a cavity 104 which is formed in the wall 105.

The insertion of the electrical component 106 in the frame 130 is guided by the cooperation between the dovetail engagement members 108 and the guiding members 107.

The insertion of the electrical component 106 ends when the tooth 103 of the flexible member 102 engages the cavity 104 formed in the wall 105 of the electrical component 106, an operation which can be detected by virtue of a clicking action, and the final part 110 of the dovetail engagement members 108 abuts on the front part 111 of the component insertion cells 131.

Such an insertion allows to avoid unwanted movements and/or separations of the electrical component 106 from the frame 130 following the application of axial and non-axial traction and/or compression forces, such as for example the insertion and extraction of a plug or the manual manoeuvre for switching on/off the switch.

A force applied to the electrical component 106 in such a direction as to pull it toward the outside of the frame 130, i.e., a traction, is contrasted by the dovetail engagement members 100 abutting on the front wall 111 of the component insertion cells 131.

A force applied to the electrical component 106 in such a direction as to push it toward the inside of the frame 130, i.e., a compression, is contrasted by the tooth 103 of the flexible member 102 abutting on the protruding wall 112 of the cavity 104 formed in the walls 105 of the electrical component 106.

Such an insertion allows to relieve the transverse sides 109 of the frame 130 of the forces applied by the electrical components 106 following their installation.

These forces are in fact discharged partly onto the flexible member 102 and partly onto the guiding members 107, accordingly avoiding the deformation of the frame 130.

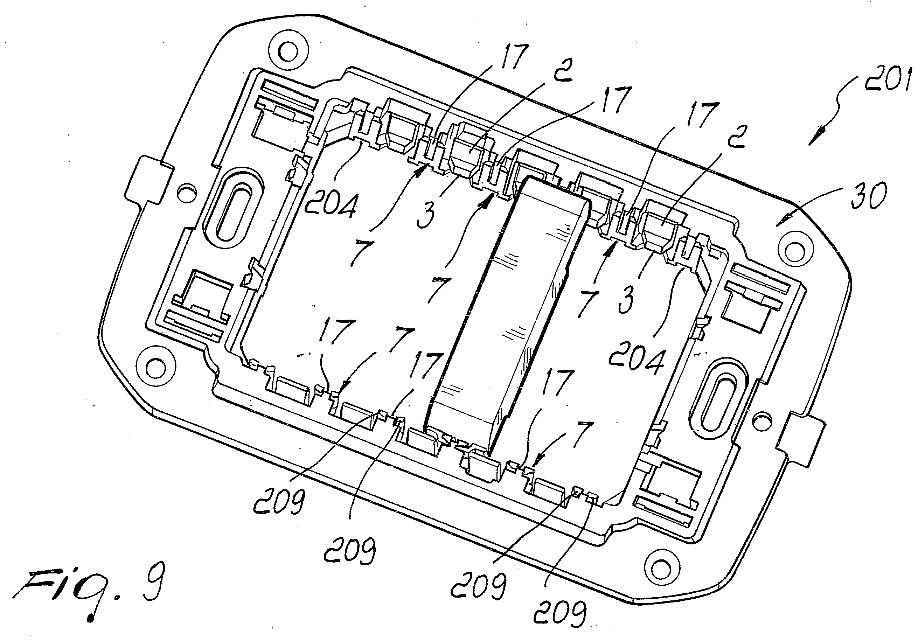

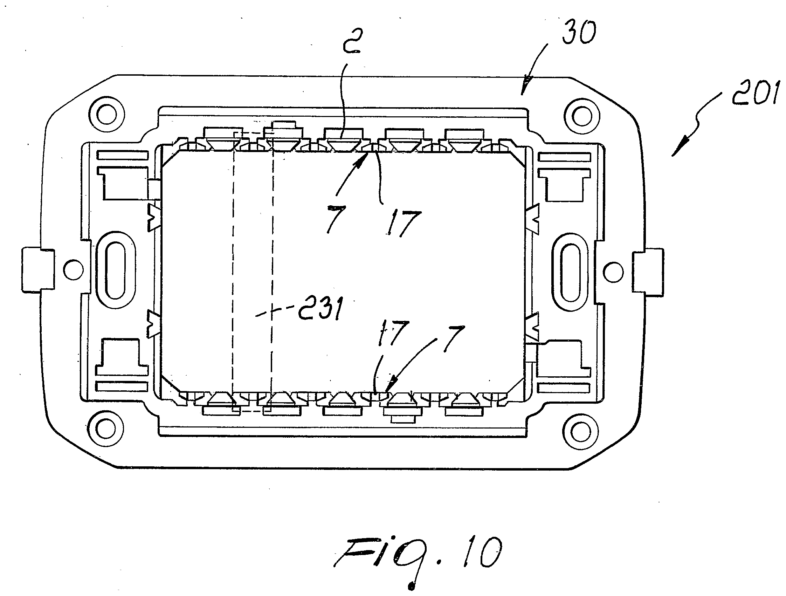

Figures 9-12 illustrate a device according to another aspect of the invention, generally designated by the reference numeral 201, having a frame 30, which is identical to the frame described earlier and is constituted by a support which is fixed to a box or backplate by means of fasteners such as, for example, screws.

Each of the guiding members 7 of the frame 30 has a groove 17.

The grooves 17 guide an electrical component 206 during insertion in the frame so as to considerably facilitate its installation.

A recess 204, provided below each guiding member 7, accommodates a tooth 205 of a flexible engagement member 207 provided on opposite walls 208 of the electrical component 206.

The guiding members 7 receive flexible engagement members 207 provided on opposite walls 208 of the electrical component 206.

The guiding members 7 allow easy insertion and sliding of the flexible engagement member 207 through the groove 17 and along the external profiles 209.

Inverted dovetail members 210 are also provided on the opposite walls 208 of the electrical component 206 and are inserted in, and slide along, the outer profiles 209 of the frame 30.

The opposite guiding members 7 provided on the transverse sides 9 of the frame 30 constitute a component insertion cell 231.

The cells 231 are arranged along the transverse sides 9 of the frame 30 at such a distance as to allow the movement/insertion of the electrical component 206 in steps of half of module.

The electrical components 206 are inserted in the frame 30 from the front, and it is therefore possible to fix the frame 30 to the box (not shown in the figures), to connect the electrical components 206 to the power supply/distribution wires, and finally to insert the electrical components 206 in the frame 30.

Installation is therefore easy and simplified.

The electrical components 206 can be removed from the frame 30 from the front. Removal can occur by using a tool (for example a screwdriver) which allows, by acting from the rear part of the frame 30, to apply a slight pressure to the flexible engagement member 207 of the electrical component.

The flexible engagement member 207 is provided with a tooth 205 at its free end and with a protruding member 213 arranged between the inverted dovetail engagement members 210.

The insertion of the electrical component 206 in the frame 30 is guided by the cooperation between the inverted dovetail engagement members 210 and the member. 207, through the protruding member 213, for flexible engagement with the guiding members 7 of the frame 30.

The insertion of the electrical component 206 ends when the tooth 205 of the flexible engagement member 207 engages the hollow 204 provided in the guiding member 7 of the frame 30 (an operation which can be detected by means of a "click" sound), and the. protruding member 213 of the electrical component 206 abuts on the final rear part of the groove 17 of the guiding member 7.

Such an insertion prevents unwanted movements and/or separations of the electrical component 206 from the frame 30 following the application of axial and nonaxial traction and/or compression forces (for example, the insertion and extraction of a plug).

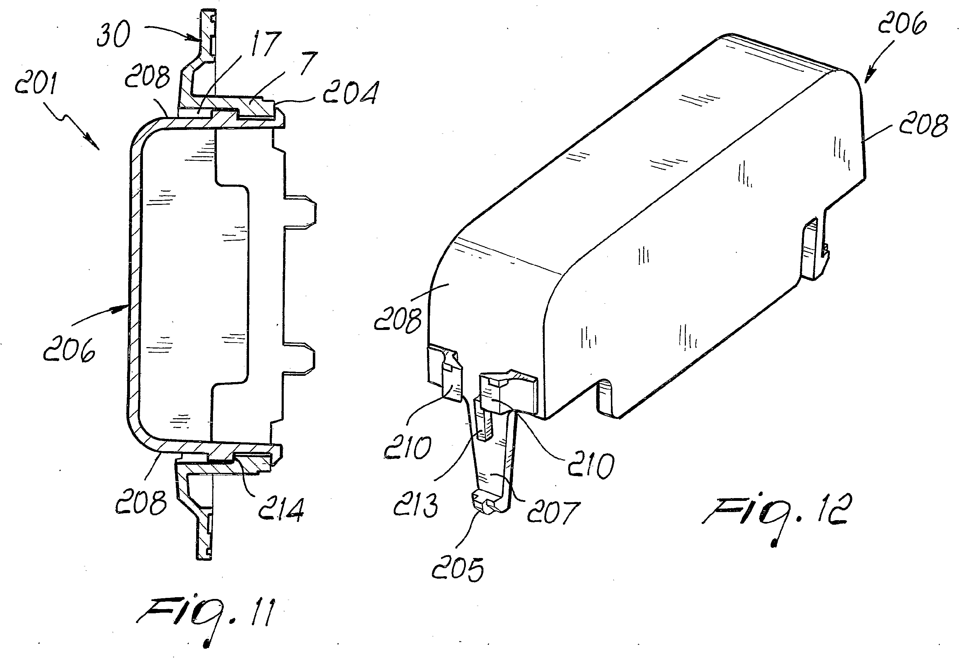

A force applied to the electrical component 206 in such a direction as to push it toward the inside of the frame 30, i.e., a compression, is contrasted by the protruding member 213 of the electrical component 206 abutting on the final rear part 214 of the groove 17 of the guiding member 7 of the frame 30, as visible in figure 11.

The force applied to the electrical component 206 in such a direction as to pull it toward the outside of the frame, i.e., traction, is contrasted by the tooth 205 of the flexible engagement member 207 abutting within the recess 204 formed in the rear part of the guiding member 7 of the frame 30.

Such an insertion allows to relieve the transverse sides 9 of the frame 30 of the forces applied by the electrical components 206 following their installation. These forces are in fact discharged onto the guiding members 7 of the frame, accordingly avoiding the deformation of the structure of the frame.

The invention achieves the intended aim and objects.

The device according to the invention is susceptible of numerous modifications and variations, within the scope of the appended claims. All the details may be replaced with other technically equivalent elements.

The materials used, as well as the dimensions, may of course be any according to the requirements and the state of the art.

## Claims

1. A modular electrical device, particularly for switches, sockets and other electrical components to be applied to a wall, comprising at least one frame (**30, 130**) and one or more electrical components (**6, 106, 206**) that can be fixed to the frame (**30, 130)** ; said frame **(30, 130)** having engagement members (**2**, **102, 3, 103),** each of said engagement members (**2, 102, 3, 103**) engaging a grip member (**4, 104**) provided on an electrical component (**6, 106**) to be an associated with said frame (**30**, **130);** said engagement members (**2**, **102, 3**, **103)** and said grip members (**4, 104**) comprising an axial guiding means (**7, 8, 107, 108**) that guides said electrical component (**6, 106**) to slide with respect to said frame (**30, 130**), and a lock means (**3, 103**) for locking the axial movement of said electrical component **(6, 106)** with respect to said frame (**30, 130**); said engagement members comprising a flexible member (**2, 102**) which is formed monolithically with said frame (**30, 130**) and is provided with a tooth (**3, 103); characterised in that** said grip member comprises a cavity **(4, 104)** formed in each of two opposite walls **(5, 105)** of the electrical component **(6, 106);** said tooth **(3, 103)** engaging said cavity (**4**, **104);** said flexible member (**2, 102**) being delimited laterally by two guiding members **(7, 107**), which constitute said axial guiding means and allow to guide said electrical component (**6, 106**) during insertion in the frame (**30, 130**); said guiding means furthermore comprising dovetail members **(8,108)** being provided on **said** walls **(5, 105**) of said electrical component (**6, 106)** and engaging said guiding members of said frame (**30, 130**); said lock means, for locking the axial movement of said electrical component (6) with respect to said frame (30), comprising an end (10) of said dovetail members (8) abutting on the bottom of notches (11) formed at the sides of said elastic member (2); said lock means comprising said tooth (3) of said elastic member (2) which engages a protruding wall (12) of said cavity (4) of said electrical component (6).

## Patentansprüche

1. Eine modulare elektrische Anordnung insbesondere für Schalter, Buchsen und andere an einer Wand anzubringende elektrische Komponenten, die mindestens einen Rahmen (30, 130) und eine oder mehrere elektrische Komponenten (6, 106, 206) umfasst, die an dem Rahmen (30, 130) befestigt werden können; wobei der Rahmen (30, 130) Eingriffsglieder (2, 102, 3, 103) hat, jedes der Eingriffsglieder (2, 102, 3, 103) in ein Greifglied (4, 104) eingreift, das an einer mit dem Rahmen (30, 130) zu verbindenden elektrischen Komponente (6, 106) angebracht ist; wobei die Eingriffsglieder (2, 102, 3, 103) und die Greifglieder (4, 104) ein axiales Führungsmittel (7, 8, 107, 108) umfassen, das die elektrische Komponente (6, 106) führt, um mit Bezug auf den Rahmen (30, 130) zu gleiten, und ein Blockiermittel (3, 103) zum Blockieren der axialen Bewegung der elektrischen Komponente (6, 106) im Verhältnis zu dem Rahmen (30, 130);
wobei die Eingriffsglieder ein flexibles Glied (2, 102) umfassen, das monolithisch mit dem Rahmen (30, 130) geformt und mit einem Zahn (3, 103) ausgestattet ist; **dadurch gekennzeichnet, dass** das Greifglied eine Vertiefung (4, 104) umfasst, die in jeder der beiden gegenüberliegenden Wände (5, 105) der elektrischen Komponente (6, 106) geformt ist; wobei der Zahn (3, 103) in die Vertiefung (4, 104) eingreift; wobei das flexible Glied (2, 102) seitlich von zwei Führungsgliedern (7, 107) begrenzt ist, welche die axialen Führungsmittel bilden und es ermöglichen, die elektrische Komponente (6, 106) beim Einführen in den Rahmen (30, 130) zu führen; wobei die Führungsmittel weiter Schwalbenschwanzglieder (8, 108) umfassen, die an den Wänden (5, 105) der elektrischen Komponente (6, 106) angebracht sind und in die Führungsglieder des Rahmens (30, 130) eingreifen; wobei die Blockierglieder zum Blockieren der axialen Bewegung der elektrischen Komponente (6) im Verhältnis zu dem Rahmen (30) ein Ende (10) der Schwalbenschwanzglieder (8) umfassen, das an den Boden von Kerben (11) anstößt, die an den Seiten des elastischen Gliedes (2) geformt sind; wobei die Blocklermittel den Zahn (3) des elastischen Gliedes (2) umfassen, der in eine vorstehende Wand (12) der Vertiefung (4) der elektrischen Komponente (6) eingreift.

## Revendications

1. Dispositif électrique modulaire, en particulier pour des interrupteurs, des prises de courant et d'autres composants électriques destinés à être fixés à une paroi, comprenant au moins un cadre (30, 130) et un ou plusieurs composants électriques (6, 106, 206) qui peuvent être fixés au cadre (30, 130); ledit cadre (30, 130) comportant des organes d'engagement (2, 102, 3, 103), chacun desdits organes d'engagement (2, 102, 3, 103) engageant un organe de serrage (4, 104) prévu sur un composant électrique (6, 106) à associer audit cadre (30, 130); lesdits organes d'engagement (2, 102, 3, 103) et lesdits organes de serrage (4, 104) comprenant un moyen de guidage axial (7, 8, 107, 108) qui guide le glissement dudit composant électrique (6, 106) par rapport au cadre (30, 130), et un moyen de verrouillage (3, 103) pour verrouiller le movement axial dudit composant électrique (6, 106) par rapport audit cadre (30, 130);
lesdits organes d'engagement comprenant un organe flexible (2, 102) qui est formé d'un seul tenant avec ledit cadre (30, 130) et est pourvu d'une dent (3, 103); **caractérisé en ce que** ledit organe de serrage comprend une cavité (4, 104) formée dans chacune de deux parois opposées (5, 105) du composant électrique (6, 106); ladite dent (3, 103) engageant ladite cavité (4, 104); ledit organe flexible (2, 102) étant délimité latéralement par deux organes de guidage (7, 107) qui constituent lesdits moyens de guidage axial et permettent de guider ledit composant électrique (6, 106) lors de l'insertion dans le cadre (30, 130); lesdits moyens de guidage comprennent en outre des queues d'aronde (8, 108) prévus sur lesdites parois (5, 105) dudit composant électrique (6, 106) et engageant lesdits organes de guidage dudit cadre (30, 130); lesdits moyens de verrouillage pour verrouiller le mouvement axial dudit composant électrique (6) par rapport au cadre (30) comprenant une extrémité (10) desdites queues d'aronde (8) en butée contre le fond d' entailles (11) formées au niveau des côtés dudit organe élastique (2); lesdits moyens de verrouillage comprenant ladite dent (3) dudit organe élastique (2) qui engage une paroi saillante (12) de ladite cavité (4) dudit composant électrique (6).
